# EUROPEAN PATENT APPLICATION

(11) **EP 4 700 328 A1**
(43) Date of publication of application: **25.02.2026**
(21) Application number: 24819564.6
(22) Date of filing: 05.06.2024
(51) Int. Cl.: G01B 11/26, H01M 10/04, H01M 10/48

(54) **DEFECT INSPECTION DEVICE AND DEFECT INSPECTION METHOD**

(30) Priority: 05.06.2023 KR 20230072310
(71) Applicant: LG Energy Solution, Ltd., Seoul 07335 (KR)
(72) Inventor: LEE, Ji Eun, Daejeon 34122 (KR)
(74) Representative: Goddar, Heinz J.
(86) International application number: PCT/KR2024/007668
(87) International publication number: WO 2024/253413

(57) **Abstract**

The present disclosure relates to a defect inspection device and a defect inspection method, and the defect inspection device according to the present disclosure includes a stacked portion in which a plurality of unit cells including at least one electrode and at least one separator are stacked to form a stack, a tilt measurement means that measures the tilt of the uppermost surface of the stack stacked in the stacked portion, and a discriminator that determines whether the unit cell is defective based on the tilt measurement value measured by the tilt measurement means.

## Description

### TECHNICAL FIELD

### CROSS-REFERENCE TO RELATED APPLICATIONS

The present application claims priority to Korean Patent Application No. 10-2023-0072310 filed on June 5, 2023 in the Republic of Korea, the disclosures of which are incorporated herein by reference.

### TECHNICAL FIELD

The present disclosure relates to a defect inspection device and a defect inspection method.

### BACKGROUND ART

Unlike primary batteries, secondary batteries are capable of being recharged and have been heavily researched and developed in recent years due to their possibility of compactness and large capacity. As the technology development and demand for mobile devices increase, demand for secondary batteries as an energy source is rapidly increasing.

Secondary batteries are attracting much attention as an energy source not only for mobile devices such as mobile phones, digital cameras, and laptops, but also for power devices such as electric bicycles, electric vehicles, and hybrid electric vehicles.

Secondary batteries are classified into coin type batteries, cylindrical batteries, prismatic batteries, and pouch type batteries depending on the shape of a battery case. In a secondary battery, the electrode assembly mounted inside the battery case is a power generating element capable of being charged and discharged with a stacked structure of electrodes and separators.

The electrode assembly may be roughly classified into a jelly-roll type in which a sheet-like positive electrode and negative electrode coated with an active material having a separator interposed therebetween are wound, a stack type in which unit cells where at least one electrode and at least one separator are stacked are sequentially stacked, and a stack/folding type in which the unit cells are wound with a long separation film. In general, the electrode is manufactured in a form where an electrode active material is coated on an electrode current collector.

Recently, as the thickness of the electrode current collector decreases, problems such as the kink of the unit cell, bending, damage to the current collector due to foreign substances, and the like are occurring.

In the prior art, the electrode assembly has been filtering out defects through a Hi-pot process, but there are also defective unit cells that cannot be filtered out as defects in the Hi-pot process, and since defective unit cells that cannot be detected through the Hi-pot process also cannot be filtered out even in the subsequent process, there is a problem of significant loss if defects occur while manufactured as a secondary battery. Here, the Hi-pot process is a process that detects the presence or absence of foreign substances by applying electric current to the electrode assembly.

### SUMMARY

### TECHNICAL PROBLEM

The present disclosure is directed to providing a defect inspection device and a defect inspection method that facilitate the detection of defects in unit cells.

### TECHNICAL SOLUTION

A defect inspection device according to an embodiment of the present disclosure may include a stacked portion in which a plurality of unit cells including at least one electrode and at least one separator are stacked to form a stack, a tilt measurement means that measures the tilt of the uppermost surface of the stack stacked in the stacked portion, and a discriminator that determines whether the unit cell is defective based on the tilt measurement value measured by the tilt measurement means.

Meanwhile, a defect inspection method according to an embodiment of the present disclosure may include a stacking step of stacking a plurality of unit cells including at least one electrode and at least one separator in the stacked portion to form a stack; a tilt measurement step of measuring the tilt of the uppermost surface of the stack by the tilt measurement means; and a discrimination step in which the discriminator determines whether the unit cell is defective based on the tilt measurement value measured by the tilt measurement means.

### ADVANTAGEOUS EFFECTS

According to the present disclosure, by effectively detecting defects in the unit cell through the tilt measurement means, defects may be checked in advance before the cell is completed, thereby reducing losses and facilitating discrimination of defects.

In addition, there is an effect of detecting defects in the unit cell more precisely by measuring the tilt of the measuring plate after placing the measuring plate on the top of the stack in which a plurality of unit cells are stacked.

Also, there is an effect of detecting defects in the unit cell with greater precision by detecting the kink or bending state of the unit cell by additionally 3D scanning through the 3D scanner.

### BRIEF DESCRIPTION OF THE DRAWINGS

FIG. 1 is a perspective view showing a stacked portion in a defect inspection device according to an embodiment of the present disclosure.
FIG. 2 is a plan view showing a unit cell applied to a defect inspection device according to an embodiment of the present disclosure.
FIG. 3 is a cross-sectional view showing a defect inspection device according to an embodiment of the present disclosure.
FIG. 4 is a perspective view showing a defect inspection device according to an embodiment of the present disclosure.

### DETAILED DESCRIPTION

The objectives, specific advantages, and novel features of the present disclosure will become more apparent from the following detailed description and preferred embodiments in connection with the accompanying drawings. It should be noted that in affixing the reference numerals to the elements in each drawing in this specification, the identical reference numerals are affixed to the identical elements as much as possible even if they are shown in different drawings. In addition, the present disclosure may be embodied in many different forms and is not limited to the embodiments described herein. And, in describing the present disclosure, detailed descriptions of related known technologies that may unnecessarily obscure the gist of the present disclosure will be omitted.

### Defect inspection device according to embodiment of present disclosure

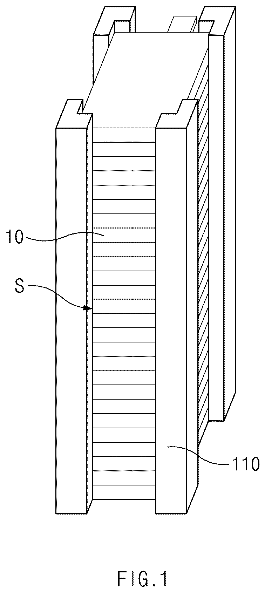

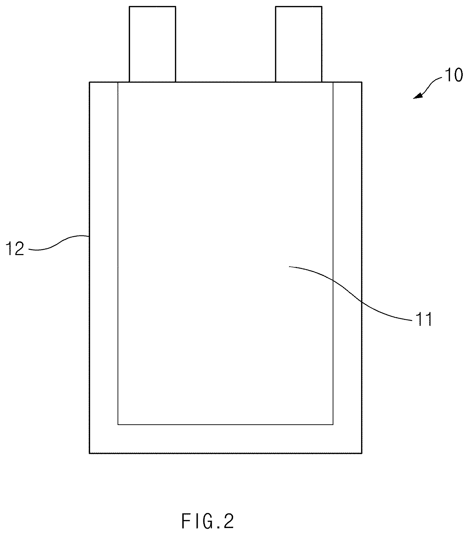

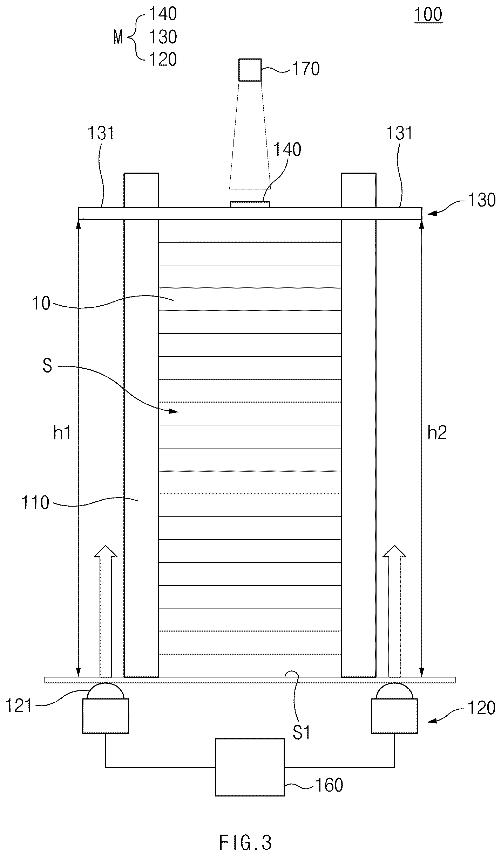

FIG. 1 is a perspective view showing a stacked portion in a defect inspection device according to an embodiment of the present disclosure, FIG. 2 is a plan view showing a unit cell applied to a defect inspection device according to an embodiment of the present disclosure, and FIG. 3 is a cross-sectional view showing a defect inspection device according to an embodiment of the present disclosure.

Referring to FIGS. 1 to 3, the defect inspection device 100 according to an embodiment of the present disclosure includes a stacked portion 110 in which a plurality of unit cells 10 including at least one electrode 11 and at least one separator 12 are stacked to form a stack S, a tilt measurement means M that measures the tilt of the uppermost surface of the stack S stacked in the stacked portion 110, and a discriminator 160 that determines whether the unit cell 10 is defective based on the tilt measurement value measured by the tilt measurement means M. The defect inspection device 100 according to an embodiment of the present disclosure may further include a 3D scan detector.

More specifically, referring to FIGS. 1 to 3, a stack S may be formed by stacking a plurality of unit cells 10 in the stacked portion 110. Here, the stacked portion 110 may be, for example, a magazine.

In addition, the stacked portion 110 may guide the stacking of the unit cells 10 when the unit cells 10 are stacked. In this case, the stacked portion 110 may include four vertically extending guide pillars to guide the four corners of the unit cells 10 when the unit cells 10 are stacked.

The unit cell 10 includes at least one electrode 11 and at least one separator 12.

The electrode 11 may include an electrode current collector and an electrode active material laminated on one or both sides of the electrode current collector.

The electrode 11 may include one or more of a positive electrode or a negative electrode.

The positive electrode may include a positive electrode current collector and a positive electrode active material applied to the positive electrode current collector. The positive electrode current collector may be formed of, for example, a foil made of aluminum, and the positive electrode active material may include, for example, lithium manganese oxide, lithium cobalt oxide, lithium nickel oxide, lithium iron phosphate, or compounds and mixtures including one or more of these.

The negative electrode may include a negative electrode current collector and a negative electrode active material applied to the negative electrode current collector. The negative electrode current collector may be formed of, for example, a foil made of copper (Cu) or nickel (Ni). The negative electrode active material may include, for example, artificial graphite, lithium metal, lithium alloy, carbon, petroleum coke, activated carbon, graphite, silicon compounds, tin compounds, titanium compounds, or alloys thereof. In this case, the negative electrode active material may further include, for example, non-graphite silica (SiO) or silicon carbide (SiC).

The separator 12 may be made of an insulating material and a flexible material. In this case, the separator 16 may be formed of, for example, a polyolefin-based resin film such as polyethylene or polypropylene having microporosity.

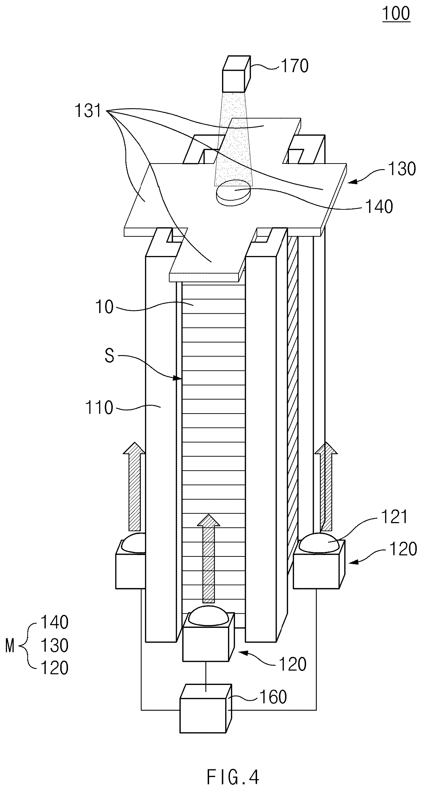

FIG. 4 is a perspective view showing a defect inspection device according to an embodiment of the present disclosure.

Referring to FIGS. 3 and 4, the tilt measurement means M measures the tilt of the uppermost surface of the stack S stacked in the stacked portion 110. Here, the tilt measurement means M may include at least one of a plurality of laser sensors 120, a tilt sensor 140, or a 3D scan detector.

The tilt measurement means M may include, for example, a plurality of laser sensors 120 that measure the tilt of the uppermost surface of the stack S. In addition, the tilt measurement means M may further include a measuring plate 130 seated on the uppermost surface of the stack S, and may measure the tilt of the uppermost surface of the stack S by detecting the tilt of the measuring plate 130 through the plurality of laser sensors 120. The measuring plate 130 may include an extension portion 131 that extends further in the lateral direction with respect to the stacking direction of the stack S. Here, laser irradiation units 121 of the plurality of laser sensors 120 may be located at the same height as the bottom surface S1 of the stack S. In this case, the tilt measurement means M may measure the tilt of the uppermost surface of the stack S by measuring the distance from the bottom surface S1 of the stack S to the extension portion 131 of the measuring plate 130 through the plurality of laser sensors 120, respectively. Here, the laser irradiation unit 121 may be located at an end of the laser sensor 120. And, the measuring plate 130 may have, for example, the extension portion 131 extending to four sides and may be formed in a cross ("+") shape as a whole.

Meanwhile, the tilt measurement means M may include, as another example, a tilt sensor 140 that measures the tilt of the uppermost surface of the stack S. In addition, the tilt measurement means M may further include a measuring plate 130 seated on the uppermost surface of the stack S. In this case, the tilt sensor 140 is located on the measuring plate 130 and the tilt of the uppermost surface of the stack S may be measured by detecting the tilt of the measuring plate 130. Here, the tilt sensor 140 may be, for example, an angle sensor that measures an angle.

Meanwhile, the tilt measurement means M may include, as still another example, a 3D scan detector that measures the tilt of the uppermost surface of the stack S by 3D scanning the uppermost surface of the stack S through the 3D scanner 170. In this case, the tilt measurement means M may further include a measuring plate 130 seated on the uppermost surface of the stack S, and may measure the tilt of the uppermost surface of the stack S by detecting the tilt of the measuring plate 130 by moving the 3D scanner 170 and 3D scanning the outer surface of the measuring plate 130.

Here, the 3D scan detector may 3D scan the outer surface of the measuring plate 130 through the laser light source irradiated from the 3D scanner 170, and may allow a portion whose tilt is elevated on the plane to be displayed on the monitoring device, for example, in red. Accordingly, if a portion displayed in red occurs, a discriminator 160 may later determine that the kink or bending of the electrode 11 in the unit cell is defective. In this case, the scale (height value) of the portion displayed in red may be set in the 3D scan detector. Here, the present disclosure is not necessarily limited to displaying the portion whose tilt is elevated on the plane in red, but the height may also be displayed, for example, in contrast or in a color other than red.

The discriminator 160 may determine whether the unit cell 10 is defective based on the tilt measurement value measured by the tilt measurement means M. Here, the discriminator 160 may be electrically connected to the tilt measurement means M to receive the tilt measurement value measured by the tilt measurement means M.

In addition, the discriminator 160 may determine that the object of measurement is defective if the tilt measurement value measured by the tilt measurement means M is out of a certain range, and that the object of measurement is good if it is not out of the range.

Also, the discriminator 160 may compare the tilt measurement value measured by the tilt measurement means M with the tilt storage value of the good quality range stored in the memory, and then may determine that the kink or bending of the electrode 11 in the unit cell 10 is defective if the tilt measurement value is out of range of the tilt storage value of the good quality range, and that the kink or bending of the electrode 11 in the unit cell 10 is good if it is not out of the range. Here, the memory may be configured as a device included in the discriminator 160, or may be located outside the discriminator 160 and electrically connected to the discriminator 160.

The 3D scan detector may detect the kink or bending state of the unit cell 10 by 3D scanning the stack S stacked in the stacked portion 110 through the 3D scanner 170. Here, the 3D scan detector may be used as the tilt measurement means M for measuring the tilt of the uppermost surface of the stack S described above, or it may be used as a means for detecting the kink or bending state of the unit cell 10 by 3D scanning the outer surface of the stack S in addition to the tilt measurement means M, or it may also be used as all means at the same time.

In this case, the 3D scan detector may detect the apparent kink or bending state of the electrode 11 in the unit cell 10 by moving the 3D scanner 170 and 3D scanning the outer surface of the stack S through the 3D scanner 170.

In addition, the 3D scan detector may 3D scan the outer surface of the stack S through the laser light source irradiated from the 3D scanner 170, and may allow a portion where the kink or bending of the electrode 11 is defective to be displayed on the monitoring device, for example, in red. In this case, the scale (value of kink or bending defect) of the portion displayed in red may be set in the 3D scan detector. Here, the present disclosure is not necessarily limited to displaying the portion where the kink or bending of the electrode 11 is defective in red, but it may also be displayed, for example, in contrast or in a color other than red.

The defect inspection device 100 according to an embodiment of the present disclosure, configured as described above, effectively detects defects in the unit cell 10 through the tilt measurement means M, so that defects may be checked in advance before the cell is completed, thereby reducing losses and facilitating discrimination of defects.

In addition, there is an effect of detecting defects in the unit cell 10 more precisely by measuring the tilt of the measuring plate 130 after placing the measuring plate 130 on the top of the stack S in which a plurality of unit cells 10 are stacked.

Also, there is an effect of detecting defects in the unit cell 10 with greater precision by detecting the kink or bending state of the unit cell 10 by additionally 3D scanning through the 3D scanner 170.

### Defect inspection method according to embodiment of present disclosure

Hereinafter, a defect inspection method according to an embodiment of the present disclosure will be described.

Referring to FIGS. 1 to 3, the defect inspection method according to an embodiment of the present disclosure includes a stacking step of stacking a plurality of unit cells 10 including at least one electrode 11 and at least one separator 12 in the stacked portion 110 to form a stack S, a tilt measurement step of measuring the tilt of the uppermost surface of the stack S by the tilt measurement means M, and a discrimination step in which the discriminator 160 determines whether the unit cell 10 is defective based on the tilt measurement value measured by the tilt measurement means M. The defect inspection method according to an embodiment of the present disclosure may further include a 3D scan detection step.

The defect inspection method according to an embodiment of the present disclosure relates to a defect inspection method for inspecting defects through the defect inspection device 100 according to the above-described embodiment. Therefore, in this embodiment, contents overlapping with the above-described embodiment will be omitted or briefly described, and the differences will be mainly described.

More specifically, referring to FIGS. 1 and 2, in the stacking step, the stack S may be formed by stacking a plurality of unit cells 10 including at least one electrode 11 and at least one separator 12 in the stacked portion 110.

In addition, at least 200 unit cells 10 may be stacked in the stacking step. In this case, for example, at least 200 to 1000 unit cells 10 may be stacked in the stacking step, but the present disclosure is not necessarily limited thereto.

Referring to FIGS. 3 and 4, in the measurement step, the tilt of the uppermost surface of the stack S may be measured by the tilt measurement means M. The tilt measurement means M may include at least one of a plurality of laser sensors 120 or a tilt sensor 140.

In the tilt measurement step, for example, the tilt of the uppermost surface of the stack S may be measured through a plurality of laser sensors 120. Here, the tilt measurement means M further includes the measuring plate 130 seated on the uppermost surface of the stack S, and in the tilt measurement step, the tilt of the uppermost surface of the stack S may be measured by detecting the tilt of the measuring plate 130 through a plurality of laser sensors 120. The measuring plate 130 may include an extension portion 131 that extends further in the lateral direction with respect to the stacking direction than the stack S. In this case, in the tilt measurement step, the laser irradiation units 121 of the plurality of laser sensors 120 are located at the same height as the bottom surface S1 of the stack S, and the tilt of the uppermost surface of the stack S may be measured by detecting the tilt of the measuring plate 130 by measuring the distance from the bottom surface S1 of the stack S to the extension portion 131 of the measuring plate 130 through the plurality of laser sensors, respectively.

In the tilt measurement step, as another example, the tilt of the uppermost surface of the stack S may be measured through the tilt sensor 140. Here, the tilt measurement means M may further include the measuring plate 130 seated on the uppermost surface of the stack S, and in the tilt measurement step, the tilt sensor 140 is located on the measuring plate 130 and the tilt of the uppermost surface of the stack S may be measured by detecting the tilt of the measuring plate 130.

In the tilt measurement step, as still another example, the tilt of the uppermost surface of the stack S may be measured by 3D scanning the uppermost surface of the stack S through the 3D scanner 170. In this case, the tilt measurement means M may further include the measuring plate 130 seated on the uppermost surface of the stack S, and in the tilt measurement step, the tilt of the uppermost surface of the stack S may be measured by detecting the tilt of the measuring plate 130 by moving the 3D scanner 170 and 3D scanning the outer surface of the measuring plate 130.

Here, in the tilt measurement step, the 3D scan detector may 3D scan the outer surface of the measuring plate 130 through the laser light source irradiated from the 3D scanner 170, and may allow a portion whose tilt is elevated on the plane to be displayed on the monitoring device, for example, in red. Accordingly, if a portion displayed in red occurs, it may be determined in the subsequent discrimination step that the kink or bending of the electrode 11 in the unit cell is defective. At this time, in the tilt measurement step, the scale (height value) of the portion displayed in red may be set in the 3D scan detector. Here, the present disclosure is not necessarily limited to displaying the portion whose tilt is elevated on the plane in red, but the height may also be displayed, for example, in contrast or in a color other than red.

Meanwhile, after stacking at least 200 unit cells 10 in the stacking step, the tilt of the uppermost surface of the stack S may be measured in the tilt measurement step. Accordingly, electrode kink or bending defects in the unit cells 10 that are not detected when stacking one or several small quantity unit cells 10 may be better detected by stacking at least 200 or more unit cells.

In the 3D scan detection step, prior to performing the discrimination step, the kink or bending state of the unit cell 10 may be detected by 3D scanning the stack S stacked in the stacking step with the 3D scanner 170. In this case, in the 3D scan detection step, the apparent kink or bending state of the electrode in the unit cell 10 may be detected by moving the 3D scanner 170 and 3D scanning the outer surface of the stack S stacked in the stacking step with the 3D scanner 170. Here, the 3D scan detector may be used as the tilt measurement means M for measuring the tilt of the uppermost surface of the stack S described above, or it may be used as a means for detecting the kink or bending state of the unit cell 10 by 3D scanning the outer surface of the stack S in addition to the tilt measurement means M, or it may also be used as all means at the same time.

In addition, in the 3D scan detection step, the 3D scan detector may 3D scan the periphery of the outer surface of the stack S through the laser light source irradiated from the 3D scanner 170, and may allow a portion where the kink or bending of the electrode 11 is defective to be displayed on the monitoring device, for example, in red. Here, the present disclosure is not necessarily limited to displaying the portion where the kink or bending of the electrode 11 is defective in red, but it may also be displayed, for example, in contrast or in a color other than red.

Meanwhile, the 3D scan detector may detect the kink or bending state of the unit cell 10 simultaneously with the tilt measurement means M, or may further detect the kink or bending state of the unit cell 10 by 3D scanning through the 3D scanner 170 once a defect in the unit cell 10 is detected through the tilt measurement means M. Accordingly, by detecting the kink or bending state of the unit cell 10 using the tilt measurement means M and the 3D scan detector together, defects in the unit cell 10 may be better detected.

In the discrimination step, the discriminator 160 may determine whether the unit cell 10 is defective based on the tilt measurement value measured by the tilt measurement means M.

In addition, in the discrimination step, it may be determined that the object of measurement is defective if the tilt measurement value measured by the tilt measurement means M is out of a certain range, and that the object of measurement is good if it is not out of the range.

Also, in the discrimination step, by comparing the tilt measurement value measured by the tilt measurement means M with the tilt storage value of the good quality range stored in the memory, it may be determined that the kink or bending of the electrode 11 in the unit cell 10 is defective if the tilt measurement value is out of range of the tilt storage value of the good quality range, and that the kink or bending of the electrode 11 in the unit cell 10 is good if it is not out of the range.

Meanwhile, in the discrimination step, the discriminator 160 may analyze the detection data detected by the 3D scanner 170 and may further determine whether the unit cell 10 is defective. At this time, in the discrimination step, it may be determined that the unit cell is defective if the amount of kink or bending of the electrode is out of a certain range. Here, in the discrimination step, for example, the 3D scan detector may 3D scan the periphery of the outer surface of the stack S with the 3D scanner 170 in the 3D scan detection step, and then it may be determined that a portion where the kink or bending of the electrode 11 is defective is defective, for example, when it is displayed in red. Here, in the discrimination step, the present disclosure is not necessarily limited to determining that the portion where the kink or bending of the electrode 11 is defective is defective, for example, only when it is displayed in red, but it may also be determined that if the portion where the kink or bending of the electrode 11 is defective in the 3D scan detection step is displayed, for example, in contrast or in a color other than red, the displayed portion is defective.

The present disclosure has been hereinabove described in detail with specific embodiments, which is intended to describe the present disclosure specifically, and the present disclosure is not limited thereto. The present disclosure may be embodied in different forms by those having ordinary skill in the art within the technical idea of the present disclosure.

In addition, the specific scope of protection of the present disclosure will be made clear by the appended claims.

### [LIST OF REFERENCE NUMERALS]

10: Unit cell
11: Electrode
12: Separator
100: Defect inspect device
110: Stacked portion
120: Laser sensor
121: Laser irradiation unit
130: Measuring plate
131: Extension portion
140: Tilt sensor
160: Discriminator
170: 3D Scanner
S: Stack
S1: Bottom surface
M: Tilt measurement means

## Claims

1. A defect inspection device comprising:
a stacked portion in which a plurality of unit cells comprising at least one electrode and at least one separator are stacked to form a stack;
a tilt measurement means that measures the tilt of the uppermost surface of the stack stacked in the stacked portion; and
a discriminator that determines whether the unit cell is defective based on the tilt measurement value measured by the tilt measurement means.

2. The defect inspection device according to claim 1,
wherein the discriminator determines that the object of measurement is defective if the tilt measurement value measured by the tilt measurement means is out of a certain range, and determines that the object of measurement is good if it is not out of the range.

3. The defect inspection device according to claim 2,
wherein the discriminator compares the tilt measurement value measured by the tilt measurement means with the tilt storage value of the good quality range stored in the memory, and then determines that the kink or bending of the electrode in the unit cell is defective if the tilt measurement value is out of range of the tilt storage value of the good quality range, and determines that the kink or bending of the electrode in the unit cell is good if it is not out of the range.

4. The defect inspection device according to claim 1,
wherein the tilt measurement means comprises a plurality of laser sensors that measure the tilt of the uppermost surface of the stack.

5. The defect inspection device according to claim 4,
wherein the tilt measurement means further comprises a measuring plate seated on the uppermost surface of the stack to measure the tilt of the uppermost surface of the stack by detecting the tilt of the measuring plate through the plurality of laser sensors.

6. The defect inspection device according to claim 5,
wherein the measuring plate comprises an extension portion that extends further in the lateral direction with respect to the stacking direction of the stack,
laser irradiation units of the plurality of laser sensors are located at the same height as the bottom surface of the stack, and
the tilt measurement means measures the tilt of the uppermost surface of the stack by measuring the distance from the bottom surface of the stack to the extension portion of the measuring plate through the plurality of laser sensors, respectively.

7. The defect inspection device according to claim 1,
wherein the tilt measurement means comprises a tilt sensor that measures the tilt of the uppermost surface of the stack.

8. The defect inspection device according to claim 1,
wherein the tilt measurement means comprises a 3D scan detector that measures the tilt of the uppermost surface of the stack by 3D scanning the uppermost surface of the stack through a 3D scanner.

9. The defect inspection device according to claim 8,
wherein the tilt measurement means further comprises a measuring plate seated on the uppermost surface of the stack, and
measures the tilt of the uppermost surface of the stack by detecting the tilt of the measuring plate by moving the 3D scanner and 3D scanning the outer surface of the measuring plate.

10. The defect inspection device according to claim 1, further comprising:
a 3D scan detector that detects the kink or bending state of the unit cell by 3D scanning the stack stacked in the stacked portion through the 3D scanner.

11. The defect inspection device according to claim 10,
wherein the 3D scan detector detects the apparent kink or bending state of the electrode in the unit cell by moving the 3D scanner and 3D scanning the outer surface of the stack.

12. The defect inspection device according to claim 11,
wherein the discriminator analyzes the detection data detected by the 3D scanner and determines that the unit cell is defective if the amount of kink or bending of the electrode is out of a certain range.

13. A defect inspection method comprising:
a stacking step of stacking a plurality of unit cells comprising at least one electrode and at least one separator in the stacked portion to form a stack;
a tilt measurement step of measuring the tilt of the uppermost surface of the stack by the tilt measurement means; and
a discrimination step in which the discriminator determines whether the unit cell is defective based on the tilt measurement value measured by the tilt measurement means.

14. The defect inspection method according to claim 13,
wherein in the discrimination step, by comparing the tilt measurement value measured by the tilt measurement means with the tilt storage value of the good quality range stored in the memory, it is determined that the kink or bending of the electrode in the unit cell is defective if the tilt measurement value is out of range of the tilt storage value of the good quality range, and that the kink or bending of the electrode in the unit cell is good if it is not out of the range.

15. The defect inspection method according to claim 13,
wherein the tilt measurement means comprises a plurality of laser sensors, and in the tilt measurement step, it measures the tilt of the uppermost surface of the stack through the plurality of laser sensors.

16. The defect inspection method according to claim 15,
wherein the tilt measurement means further comprises a measuring plate seated on the uppermost surface of the stack,
the measuring plate comprises an extension portion that extends further in the lateral direction with respect to the stacking direction than the stack, and
in the tilt measurement step, laser irradiation units of the plurality of laser sensors are located at the same height as the bottom surface of the stack, and the tilt measurement means measures the tilt of the uppermost surface of the stack by detecting the tilt of the measuring plate by measuring the distance from the bottom surface of the stack to the extension portion of the measuring plate through the plurality of laser sensors, respectively.

17. The defect inspection method according to claim 16,
wherein after stacking at least 200 unit cells in the stacking step,
the tilt of the uppermost surface of the stack is measured in the tilt measurement step.

18. The defect inspection method according to claim 17,
wherein the tilt measurement means comprises a tilt sensor, and
in the tilt measurement step, the tilt of the uppermost surface of the stack is measured through the tilt sensor.

19. The defect inspection method according to claim 18,
wherein the tilt measurement means comprises a 3D scan detector that measures the tilt of the uppermost surface of the stack by 3D scanning the uppermost surface of the stack through a 3D scanner, and
in the tilt measurement step, the tilt measurement means measures the tilt of the uppermost surface of the stack by moving the 3D scanner and 3D scanning the outer surface of the uppermost surface of the stack.

20. The defect inspection method according to claim 19, further comprising:
prior to performing the discrimination step, a 3D scan detection step of detecting the apparent kink or bending state of the electrode in the unit cell by moving the 3D scanner and 3D scanning the outer surface of the stack stacked in the stacking step with the 3D scanner.

21. The unit cell defect inspection method according to claim 20,
wherein in the discrimination step, the discriminator analyzes the detection data detected by the 3D scanner and determines that the unit cell is defective if the amount of kink or bending of the electrode is out of a certain range.
